# EUROPÄISCHE PATENTSCHRIFT

(11) **EP 2 502 479 B1**
(45) Veröffentlichungstag und Bekanntmachung des Hinweises auf die Patenterteilung: **29.05.2019**
(21) Anmeldenummer: 12401042.2
(22) Anmeldetag: 19.03.2012
(51) Int. Cl.: A01C 7/04, A01C 7/08

(54) **Pneumatische Einzelkornsämaschine**
Pneumatic single grain seeder
Semoir monograin pneumatique

(30) Priorität: 24.03.2011 DE 102011001520
(43) Veröffentlichungstag der Anmeldung: 26.09.2012
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Hoffmann, Karl-Peter, 27798 Hude (DE)

(56) Entgegenhaltungen:
- EP-A1- 2 067 396
- EP-A1- 2 368 415
- EP-A2- 2 289 298
- DE-A1-102010 016 152

## Beschreibung

Die Erfindung betrifft eine pneumatische Einzelkornsämaschine gemäß des Oberbegriffes des Patentanspruches 1.

Eine derartige pneumatische Einzelkornsämaschine ist durch die EP 2 289 298 A2 bekannt. Bei dieser Einzelkornsämaschine lassen sich zumindest einige der Einmündungsöffnungen durch motorisch betätigbare Absperrmittel verschließen. Somit lässt sich beispielsweise eine Fahrgassenschaltung oder eine Arbeitsbreitenreduzierung verwirklichen. Die vereinzelten Saatkörner werden dann nicht den Ausbringleitungen zugeleitet sondern in den Saatgutvorrat zurückgeführt.

Wenn die Absperrmittel die Eingangsöffnungen nicht ausreichend luftdicht verschließen, können die Saatkörner, welche in den Saatgutvorrat zurückgeführt werden sollen, im Spaltbereich zwischen der Einmündungsöffnung unter dem Absperrmittel anhaften, weil Luft aus dem Vorratsbehälterbereich in die Ausbringleitung durch den Spalt zwischen der Einmündungsöffnung der Ausbringleitung und dem Absperrmittel entweicht.

Der Erfindung liegt die Aufgabe zu Grunde, in einfacher Weise sicherzustellen, dass die Absperrmittel die Ausbringleitung ausreichend verschließen, so dass die Saatkörner, im Spaltbereich zwischen Einmündungsöffnung und dem Absperrmittel nicht anhaften.

Diese Aufgabe wird erfindungsgemäß durch die kennzeichnenden Merkmale des Anspruches 1 gelöst.

Infolge der Maßnahme, dass die Absperrmittel beweglich gegenüber den Eingangsöffnungen ausgestaltet sind und zumindest in dem die Eingangsöffnungen der Ausbringleitungen verschließenden Bereich aus einem elastischen Material bestehen, werden die Eingangsöffnung ausrechend luftdicht verschlossen, somit besteht nicht mehr die Gefahr, dass Saatkörner im Spaltbereich zwischen Eingangsöffnung und Absperrmittel bei Absperrung der entsprechenden Ausbringleitung anhaften.

Die aus einem elastischen Material bestehenden Absperrklappen können sich in ausreichend angepasster Weise gegen den Eingangsbereich der Eingangsöffnungen legen, um die Ausbringleitung ausreichend luftdicht abzusperren.

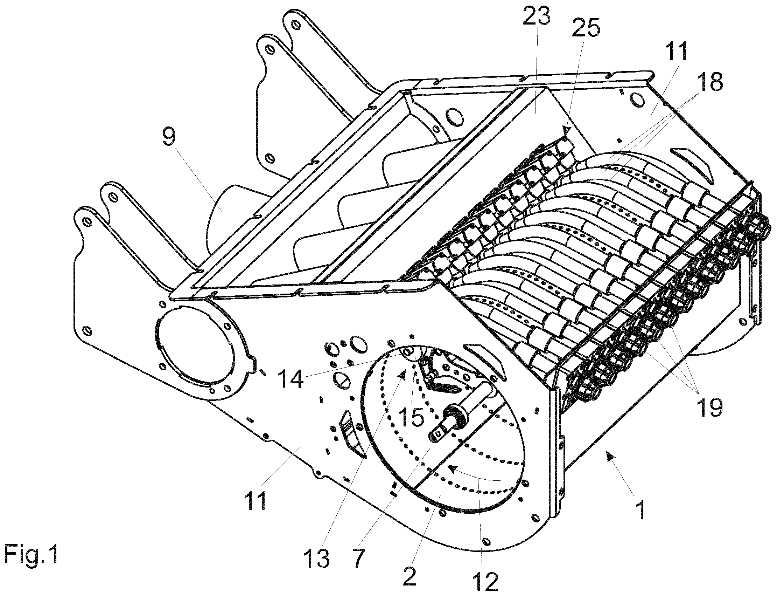

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht,
- Fig. 2: das Vereinzelungsgehäuse mit der Vereinzelungstrommel gemäß Fig. 1 in Seitenansicht,

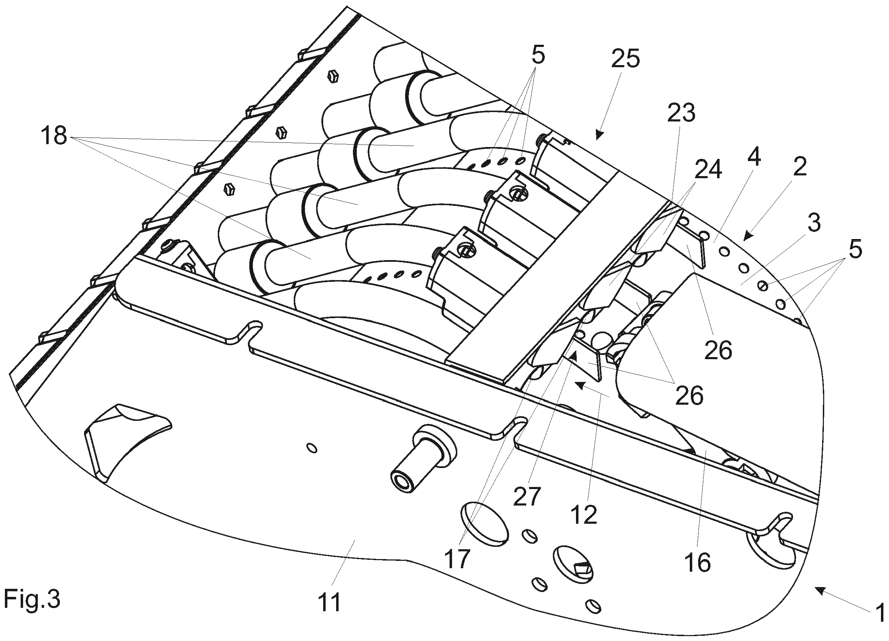

- Fig. 3: ein Teilbereich des Vereinzelungsgehäuses mit dem Ablöse- und Übergabebereich der Saatkörner von der Trommel in die Einmündungsöffnungen der Ausbringleitungen in vergrößertem Maßstab und perspektivischer Ansicht, wobei die Einmündungsöffnung durch die Klappen der Absperrmittel in Öffnungsstellung dargestellt sind und

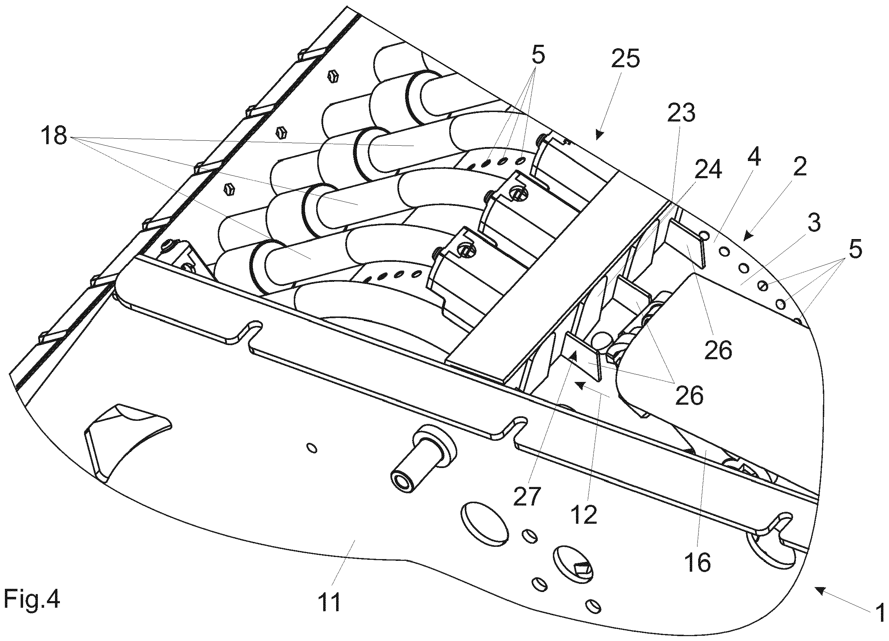

- Fig. 4: ein Teilbereich des Vereinzelungsgehäuses mit dem Ablöse- und Übergabebereich der Saatkörner von der Trommel in die Einmündungsöffnung der Ausbringleitungen in vergrößertem Maßstab und perspektivischer Ansicht gemäß Fig. 3, wobei die Einmündungsöffnung durch die Klappe der Absperrmittel in Absperrstellung dargestellt sind.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten. An die Verbindungsstücke der Ausbringleitungen 18 sind Ausbringverlängerungsleitungen, die die Ausbringleitungen bis zu den Ausbringelementen verlängern, anzuschließen.

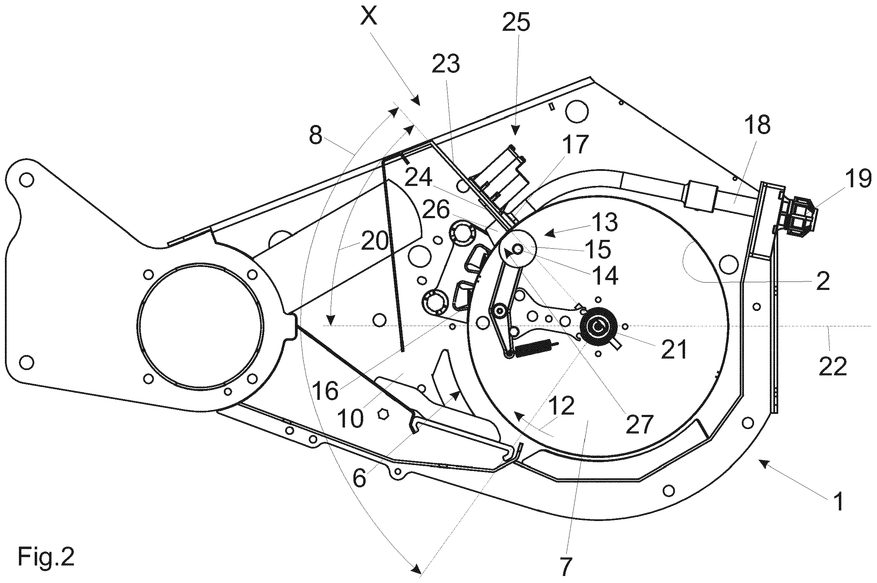

Die Einmündungsöffnungen 17 der Ausbringleitungen 18 und die zugeordneten Abdeckeinrichtungen 13 sind, insbesondere wie die Fig. 2 zeigt, im auf die Drehrichtung 12 der Trommel 2 bezogenen aufsteigenden Rotationsbereich des Vereinzelungsbereiches 8 der Trommel 2 angeordnet. Hierbei sind die Eingangsöffnungen 17 und die zugeordneten Abdeckmittel 15 der Abdeckeinrichtung 13 in einem Bereich angeordnet, der in einem Winkelbereich 20 zwischen 0° und 60°, im Ausführungsbeispiel von etwa 45°, zu einer durch die Trommeldrehachse 21 gezogenen Horizontalen 22 liegt.

Die im Bereich der Ausbringleitungen 18 liegende Wand 23 des Vereinzelungsgehäuses 1 ist im Bereich der Eingangsöffnungen 17 der Ausbringleitungen 18 angeordnet.

Den Ausbringleitungen 18 sind im Bereich der Einmündungsöffnungen 17 als verschwenkbare Klappen 24 ausgebildete Absperrmittel 25 angeordnet, um die jeweilige Eingangsöffnung 17 der Ausbringleitungen 18 absperren zu können.

Weiterhin sind an der im Bereich der Ausbringleitungen 18 angeordneten Wand 23 des Vereinzelungsgehäuses 1 im Bereich der Einmündungsöffnungen 17 Trennwände 26 angeordnet. Diese Trennwände 26 sind im Übergabebereich 27 der vereinzelten Saatkörner von der Trommel 2 in die Ausbringleitungen 18 zwischen den einzelnen Perforationsreihen 4 angebracht. Hierbei reicht die Unterseite der Trennwände 26 zumindest annähernd bis an die Oberfläche der Trommel 2 heran. Weiterhin sind die Trennwände 26 zumindest annähernd bis in den Bereich, in welchem die Saatkörner durch die Abdeckeinrichtung 13 von den Perforationen 4 durch die Unterbrechung der Druckdifferenz abgelöst werden, reichend angeordnet.

Wenn einzelnen Ausbringleitungen 18, d.h. einzelnen Ausbringelementen zur Reduzierung der Arbeitsbreite oder zum Anlegen von Fahrgassen keine Saatkörner zugeleitet werden sollen, werden über eine vorzugsweise elektronische Steuereinrichtung ansteuerbare Betätigungseinrichtungen für die Klappen 24 der Absperrmittel 25 betätigt.

Wenn die Klappen 24 der Absperrmittel 25 die Einmündungsöffnungen 17 der Ausbringleitungen 18 verschließen, wie Fig. 5 dargestellt ist, können die Saatkörner nicht mehr über die Einmündungsöffnungen 17 in die Ausbringleitungen 18 gelangen und fallen aufgrund der Schwerkraft entlang der Trommeloberfläche der Trommel 2 seitlich der Perforationsreihen 4 in den Saatgutvorratsbereich 10 zurück.

Die Klappen 24 der Absperrmittel 25 bestehen zumindest in dem Bereich, der die Eingangsöffnungen 17 der Ausbringleitungen 18 verschließt, aus einem elastischen Material. Aufgrund der Ausbildung, dass die Klappen 24 in dem vor beschriebene Bereich aus einem elastischen Material bestehen, können sie sich an die Form der Eingangsöffnungen 17 anpassen und diese luftdicht verschließen. Die zumindest teilweise aus einem elastischen Material bestehenden Klappen 24 sind somit auch in der Lage Fertigungsungenauigkeiten zu überbrücken und/oder auszugleichen. In nicht dargestellter Weise ist es auch möglich, dass die Absperrklappen gegenüber der jeweiligen Eingangsöffnung der jeweiligen Ausbringleitung beweglich angeordnet sind.

Durch die Trennwände 26 wird verhindert, dass die Saatkörner beim Ablösevorgang und zu Beginn des Zurückfallvorganges in den Saatgutvorratsbereich 10 soweit seitlich abgelenkt werden können, dass sie die vereinzelten Saatkörner der benachbarten Perforationsreihen 4 berühren oder die Vereinzelung der Saatkörner der benachbarten Perforationsreihen 5 stören können.

## Patentansprüche

1. Pneumatische Einzelkornsämaschine mit einem einen Saatgutvorratsbehälter aufweisenden Gehäuse (1) und zumindest einer drehbar angetriebenen Vereinzelungstrommel (2), in deren Umfangsmantel (3) kreisförmig in Perforationsreihen (4) angeordnete Perforationen (5) angebracht sind, einem Gebläse, mittels welchem eine Druckdifferenz zwischen dem Innenraum (7) der Vereinzelungstrommel (2) und dem Außenbereich (6) der Vereinzelungstrommel (2) erzeugbar ist, so dass, wenn die Vereinzelungstrommel (2) durch den Saatgutvorrat geführt wird, sich an den Perforationen (5) auf der Außenseite (6) der perforierten Trommel (2) Samenkörner anlagern, wobei das Gehäuse (1) zwei voneinander beabstandete Seitenwände (11) aufweist, die sich parallel zur Bewegungsrichtung der Trommel (2) erstrecken und mit der Trommel (2) zumindest annähernd abdichtend zusammenwirken, wobei eine die an die Perforationen (5) angelegte Druckdifferenz zum Ablösen der Saatkörner von den Perforationen (5) unterbrechende Abdeckeinrichtung (13) im Innenraum (7) der Trommel (2) angeordnet ist, wobei im Bereich der Abdeckeinrichtung (13) und den Perforationsreihen (4) jeweils das eine Ende einer Ausbringleitung (18) mit ihrer Einmündungsöffnung (17) bis an die Trommeloberfläche zumindest annähernd heranreichend angeordnet ist, wobei die Einmündungsöffnungen (17) der Ausbringleitungen (18) und die zugeordneten Abdeckeinrichtungen (13) im auf die Drehrichtung (12) bezogenen aufsteigenden Rotationsbereich des Vereinzelungsbereiches (8) der Trommel (2) angeordnet sind, wobei zumindest einigen Ausbringleitungen (18) motorisch betätigbare Absperrmittel (25) zugeordnet sind, wobei Absperrmittel (25) im Bereich der Eingangsöffnungen (17) der Ausbringleitungen (18) angeordnet sind und die Eingangsöffnungen (17) verschließen, **dadurch gekennzeichnet, dass** die Absperrmittel (25) als zumindest in dem die Eingangsöffnungen (17) der Ausbringleitungen (18) verschließenden Bereich aus einem elastischen Material bestehende Absperrklappen (24) ausgebildet sind, dass die Absperrklappen (24) die Eingangsöffnungen (17) luftdicht verschließen, dass die Absperrklappen (24) gegenüber der Eingangsöffnung (17) der jeweiligen Ausbringleitung (18) beweglich angeordnet sind.

## Claims

1. Pneumatic single grain seeder having a housing (1) which has a seed storage vessel, and having at least one rotatably driven separating drum (2), in the circumferential drum shell (3) of which perforations (5) are made which are arranged in a circular manner in perforation rows (4), having a fan, by means of which a pressure difference between the interior space (7) of the separating drum (2) and the outer region (6) of the separating drum (2) can be generated, with the result that, when the separating drum (2) is guided through the seed supply, seeds accumulate on the perforations (5) on the outer side (6) of the perforated drum (2), the housing (1) having two side walls (11) which are spaced apart from one another, extend parallel to the movement direction of the drum (2), and interact with the drum (2) in an at least approximately sealing manner, a covering device (13) which interrupts the pressure difference which is applied to the perforations (5) in order to release the seeds from the perforations (5) being arranged in the interior space (7) of the drum (2), in each case the one end of a discharge line (18) being arranged in the region of the covering device (13) and the perforation rows (4) so as to reach with its orifice opening (17) at least approximately as far as the drum surface, the orifice openings (17) of the discharge lines (18) and the associated covering devices (13) being arranged in the rising (in relation to the rotational direction (12)) rotation area of the separating region (8) of the drum (2), at least some discharge lines (18) being assigned shut-off means (25) which can be actuated by motor, shut-off means (25) being arranged in the region of the inlet openings (17) of the discharge lines (18) and closing the inlet openings (17), **characterized in that** the shut-off means (25) are configured as shut-off flaps (24) which consist of an elastic material at least in the region which closes the inlet openings (17) of the discharge lines (18), **in that** the shut-off flaps (24) close the inlet openings (17) in an airtight manner, and **in that** the shut-off flaps (24) are arranged such that they can be moved with respect to the inlet opening (17) of the respective discharge line (18) .

## Revendications

1. Semoir monograin pneumatique comprenant un boîtier (1) présentant un réservoir de semences et au moins un tambour de séparation (2) entraîné en rotation, dans l'enveloppe périphérique (3) duquel sont pratiquées des perforations (5) disposées en cercle en rangées de perforations (4), une soufflante au moyen de laquelle une différence de pression peut être générée entre l'espace interne (7) du tambour de séparation (2) et la région extérieure (6) du tambour de séparation (2) de telle sorte que lorsque le tambour de séparation (2) est guidé à travers la réserve de semences, des grains de semences s'accumulent au niveau des perforations (5) sur le côté extérieur (6) du tambour perforé (2), le boîtier (1) présentant deux parois latérales (11) espacées l'une de l'autre, qui s'étendent parallèlement à la direction de déplacement du tambour (2) et qui coopèrent au moins approximativement de manière hermétique avec le tambour (2), un dispositif de recouvrement (13) interrompant la différence de pression appliquée aux perforations (5) pour décoller les grains de semences des perforations (5) étant disposé dans l'espace interne (7) du tambour (2), à chaque fois l'une des extrémités d'une conduite de décharge (18) étant disposée de manière à s'approcher au moins approximativement avec son ouverture d'embouchure (17) jusqu'à la surface du tambour dans la région du dispositif de recouvrement (13) et les rangées de perforations (4), les ouvertures d'embouchure (17) des conduites de décharge (18) et les dispositifs de recouvrement associés (13) étant disposés dans la région de rotation montante par rapport au sens de rotation (12) de la région de séparation (8) du tambour (2), au moins certaines des conduites de décharge (18) étant associées à des moyens de blocage (25) à commande motorisée, des moyens de blocage (25) étant disposés dans la région des ouvertures d'entrée (17) des conduites de décharge (18) et fermant les ouvertures d'entrée (17), **caractérisé en ce que** les moyens de blocage (25) sont réalisés sous forme de clapets de blocage (24) constitués d'un matériau élastique au moins dans la région fermant les ouvertures d'entrée (17) des conduites de décharge (18), **en ce que** les clapets de blocage (24) ferment de manière étanche à l'air les ouvertures d'entrée (17), et **en ce que** les clapets de blocage (24) sont disposés de manière déplaçable par rapport à l'ouverture d'entrée (17) de la conduite de décharge respective (18) .
